# EUROPÄISCHE PATENTANMELDUNG

(11) **EP 4 350 175 A1**
(43) Veröffentlichungstag der Anmeldung: **10.04.2024**
(21) Anmeldenummer: 21943485.9
(22) Anmeldetag: 01.06.2021
(51) Int. Cl.: F16H 57/04, B60K 11/02, H02K 9/19, F16H 37/08

(54) **BRÜCKENANTRIEBSSYSTEM**

(71) Anmelder: Schaeffler Technologies AG & Co. KG, 91074 Herzogenaurach (DE)
(72) Erfinder: SONG, Zhiqiang, Suzhou, Jiangsu (CN); OUYANG, Peng, Shanghai 200237 (CN); HUANG, Bo, Shanghai 200129 (CN); LIU, Lei, hangzhou, Jiangsu 213032 (CN)
(86) Internationale Anmeldenummer: PCT/CN2021/097655
(87) Internationale Veröffentlichungsnummer: WO 2022/252113

(57) **Zusammenfassung**

Brückenantriebssystem, umfassend ein Gehäuse (1), einen Motor (2), einen Drehzahlreduzierungsmechanismus (3) und eine Wellenbaugruppe (4). Das Gehäuse (1) umfasst einen ersten Raum (S1) und einen zweiten Raum (S2), die voneinander getrennt sind. Der Motor (2) ist in dem ersten Raum (S1) untergebracht und der Drehzahlreduzierungsmechanismus (3) ist in dem zweiten Raum (S2) untergebracht. Die Wellenbaugruppe (4) ist mit einem Öleinlass (42o) und einem Ölauslass (41o) ausgebildet, die beide in dem zweiten Raum (S2) angeordnet sind. Ein Ölkanal, der sich von dem Öleinlass (42o) in den ersten Raum (S1) erstreckt und dann zu dem Ölauslass (41o) zurückkehrt, ist innerhalb der Wellenbaugruppe (4) ausgebildet, sodass Öl aus dem zweiten Raum (S2) von dem Öleinlass (42o) in den Ölkanal fließen kann, um einen Rotor (22) zu kühlen, und dann von dem Ölauslass (41o) in den zweiten Raum (S2) zurückkehren kann. Auf diese Weise wird die Kühlleistung eines Motors verbessert, wodurch sich die Leistungsfähigkeit des Motors erhöht und die Anforderungen an die Wärmebeständigkeit der einzelnen Komponenten reduziert werden können.

## Beschreibung

### Technisches Gebiet

Die vorliegende Erfindung betrifft das Gebiet der Antriebssysteme von Fahrzeugen und insbesondere ein Brückenantriebssystem für ein Fahrzeug.

### Hintergrund

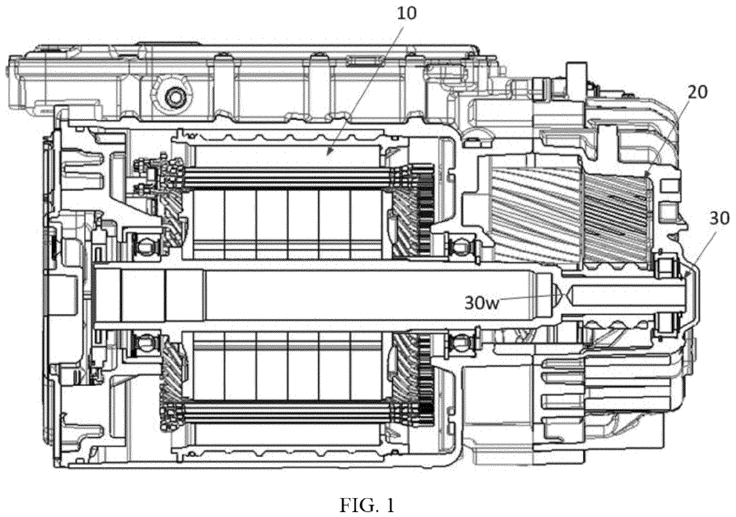

In einem reinen Elektrofahrzeug wird ein Motor als Energiequelle verwendet, und ein sogenanntes Brückenantriebssystem besteht aus dem Motor und einem Drehzahlreduzierungsmechanismus. Wie in FIG. 1 gezeigt, werden in der Ausgestaltung eines bestehenden Brückenantriebssystems eine Welle eines Motors 10 und eine Eingangswelle eines Drehzahlreduzierungsmechanismus 20 zur Ausbildung einer Drehwelle 30 integriert. Um das Gewicht der oben genannten Drehwelle 30 zu reduzieren, ist die Drehwelle 30 sowohl auf der Motorseite als auch auf der Seite des Drehzahlreduzierungsmechanismus mit Sacklöchern versehen. Zwischen den beiden Sacklöchern ist eine Trennwand 30w ausgebildet, sodass das in einem Gehäuse des Drehzahlreduzierungsmechanismus 20 gelagerte Öl nicht über die Drehwelle 30 in eine Position fließen kann, in der sich ein Rotor des Motors 10 befindet.

Daher kann der Motor 10 nur durch einen Kühlmantel und Luft gekühlt werden, was zu einer schlechten Kühlleistung führt, die die Leistungsfähigkeit des Motors 10 einschränkt und höhere Anforderungen an die Wärmebeständigkeit der einzelnen Komponenten stellt. Weil ein Innendurchmesser des Sacklochs, das sich auf der Seite befindet, wo der Drehzahlreduzierungsmechanismus 20 in der Drehwelle 30 angeordnet ist, kleiner ist als ein Innendurchmesser des Sacklochs, das sich auf der Seite befindet, wo der Motor 10 in der Drehwelle 30 angeordnet ist, führt eine Verschiebung der Trennwand 30w in Richtung der Seite, auf der sich der Motor 10 befindet, damit das in dem Gehäuse des Drehzahlreduzierungsmechanismus gelagerte Öl über die Drehwelle 30 zu der Position fließen kann, an der sich der Rotor des Motors 10 befindet, dazu, dass eine Wand des Teils der Drehwelle 30, der sich auf der Seite befindet, auf der sich der Motor 10 befindet, zu dick wird.

### Kurzdarstellung

Die vorliegende Erfindung wurde im Hinblick auf die vorstehend beschriebenen Mängel des Standes der Technik erarbeitet. Eine Aufgabe der vorliegenden Erfindung ist es, ein neuartiges Brückenantriebssystem bereitzustellen. Das Brückenantriebssystem kann Öl, das in einem Gehäuse eines Drehzahlreduzierungsmechanismus gelagert ist, zu einer Position transportieren, an der sich ein Rotor eines Motors befindet, wodurch die Kühlleistung des Motors verbessert wird.

Um die vorstehend genannten Aufgaben zu erfüllen, werden die folgenden technischen Lösungen angewendet.

Die vorliegende Erfindung stellt ein Brückenantriebssystem bereit, das ein Gehäuse, einen Motor, einen Drehzahlreduzierungsmechanismus und eine Wellenbaugruppe umfasst, wobei das Gehäuse einen ersten Raum und einen zweiten Raum umfasst, die voneinander getrennt sind; wobei der zweite Raum auf einer axialen Seite relativ zu dem ersten Raum in einer axialen Richtung der Wellenbaugruppe angeordnet ist; wobei der Motor in dem ersten Raum untergebracht ist und der Drehzahlreduzierungsmechanismus in dem zweiten Raum untergebracht ist; wobei die Wellenbaugruppe eine Welle umfasst, die sich von dem ersten Raum in den zweiten Raum erstreckt; wobei die Welle drehfest mit einem Rotor des Motors verbunden ist und die Welle auch als eine Eingangswelle des Drehzahlreduzierungsmechanismus verwendet wird;
wobei die Wellenbaugruppe mit einem Öleinlass und einem Ölauslass ausgebildet ist, die beide in dem zweiten Raum angeordnet sind; und wobei ein Ölkanal, der sich von dem Öleinlass in den ersten Raum erstreckt und dann zu dem Ölauslass zurückkehrt, innerhalb der Wellenbaugruppe ausgebildet ist, sodass Öl aus dem zweiten Raum von dem Öleinlass in den Ölkanal fließen kann, um den Rotor zu kühlen, und dann von dem Ölauslass in den zweiten Raum zurückkehren kann.

Bevorzugt ist im Inneren der Welle ein entlang der axialen Richtung durch die Welle verlaufender innerer Hohlraum ausgebildet, und die Wellenbaugruppe umfasst ferner: eine Ölsammelkomponente, wobei die Ölsammelkomponente an dem Gehäuse fixiert ist und die Ölsammelkomponente und die Welle voneinander beabstandet sind, wobei der Öleinlass an der Ölsammelkomponente ausgebildet ist, wobei ein Teil der Ölsammelkomponente, der in den inneren Hohlraum eingesetzt ist, mit einem ersten Öleinlasskanal ausgebildet ist, der mit dem Öleinlass in Verbindung steht, und wobei die Ölsammelkomponente das Öl in dem zweiten Raum über den Öleinlass in dem ersten Öleinlasskanal sammeln kann; und
eine Ölführungskomponente, wobei die Ölführungskomponente an der Welle fixiert und einstückig in dem inneren Hohlraum angeordnet ist, wobei ein zweiter Öleinlasskanal in Verbindung mit dem ersten Öleinlasskanal innerhalb der Ölführungskomponente ausgebildet ist, wobei ein Ölablasskanal zwischen der Ölführungskomponente und der Welle ausgebildet ist, wobei der Ölablasskanal in Verbindung mit dem zweiten Öleinlasskanal und dem Ölauslass steht, die auf der Welle ausgebildet sind, und wobei während der Drehung mit der Welle die Ölführungskomponente es dem Öl aus dem ersten Öleinlasskanal ermöglichen kann, nacheinander durch den zweiten Öleinlasskanal und den Ölablasskanal zu fließen und dann vom Ölauslass zum zweiten Raum zurückzukehren.

Besonders bevorzugt umfasst die Ölsammelkomponente:
einen Ölsammelzylinderteil, wobei der Ölsammelzylinderteil in dem inneren Hohlraum angeordnet ist, wobei der Öleinlass an einem axialen Seitenende des Ölsammelzylinderteils ausgebildet ist, und der erste Öleinlasskanal durch den Ölsammelzylinderteil entlang der axialen Richtung verläuft; und
einen Flanschteil, wobei der Flanschteil außerhalb der Welle angeordnet ist, wobei der Flanschteil sich von einem axialen Seitenende des Ölsammelzylinderteils in Richtung einer radialen Außenseite erstreckt, und zumindest ein Teil des Flanschteils sich in Richtung der radialen Außenseite erstreckt und sich gleichzeitig schräg in Richtung der anderen axialen Seite erstreckt, um zu bewirken, dass das Öl in dem zweiten Raum am Öleinlass zusammenläuft.

Besonders bevorzugt wird eine Querschnittsfläche eines inneren Hohlraums des Ölsammelzylinderteils, der zur Bildung des ersten Öleinlasskanals verwendet wird, von einer axialen Seite zur anderen axialen Seite allmählich größer.

Besonders bevorzugt umfasst die Ölsammelkomponente ferner einen von einem Außenumfang des Flanschteils zur radialen Außenseite hin abstehenden Anschlagteil und der Anschlagteil ist mit dem Gehäuse klemmend verbunden.

Besonders bevorzugt umfasst die Ölführungskomponente:
einen Ölführungszylinderteil, wobei der Ölführungszylinderteil von einer Innenwand der Welle beabstandet ist, und der zweite Öleinlasskanal durch den Ölführungszylinderteil entlang der axialen Richtung verläuft;
einen ersten Endkantenteil, wobei der erste Endkantenteil an einem axialen Seitenende des Ölführungszylinderteils angeordnet und an der Welle fixiert ist; und einen zweiten Endkantenteil, wobei der zweite Endkantenteil an dem anderen axialen Seitenende des Ölführungszylinderteils angeordnet und an der Welle fixiert ist, und der zweite Endkantenteil mit einer Verbindungsöffnung ausgebildet ist, die eine Verbindung zwischen dem zweiten Öleinlasskanal und dem Ölablasskanal ermöglicht. Besonders bevorzugt wird eine Querschnittsfläche eines inneren Hohlraums des Ölführungszylinderteils, der zur Bildung des zweiten Öleinlasskanals verwendet wird, von einer axialen Seite zur anderen axialen Seite allmählich größer.

Besonders bevorzugt ist eine Innenwand des Ölführungszylinderteils mit Schaufeln ausgebildet, die zu einer Innenseite des zweiten Öleinlasskanals hin vorstehen, um das Öl so zu führen, dass es während der Drehung der Ölführungskomponente mit der Welle in den Ölkanal fließt.

Besonders bevorzugt umfasst die Wellenbaugruppe ferner einen Ölstopfen, der im inneren Hohlraum der Welle angeordnet und innerhalb der Welle fixiert ist;
wobei der innere Hohlraum einen Abschnitt mit großem Durchmesser und einen Abschnitt mit kleinem Durchmesser umfasst, die miteinander in Verbindung stehen, ein Durchmesser des Abschnitts mit großem Durchmesser größer ist als ein Durchmesser des Abschnitts mit kleinem Durchmesser, und der Abschnitt mit kleinem Durchmesser auf einer axialen Seite relativ zu dem Abschnitt mit großem Durchmesser angeordnet ist, sodass eine Stufenstruktur innerhalb der Welle ausgebildet wird; und
wobei die Ölführungskomponente zwischen dem Ölstopfen und der Stufenstruktur angeordnet ist, ein axiales Seitenende der Ölführungskomponente an der Stufenstruktur anliegt und das andere axiale Seitenende der Ölführungskomponente an dem Ölstopfen anliegt.

Besonders bevorzugt ist der zweite Endkantenteil der Ölführungskomponente mit einem Aussparungsteil ausgebildet, der in Richtung des Ölstopfens geöffnet ist, und der zweite Endkantenteil liegt an dem Ölstopfen an, sodass der Aussparungsteil eine Verbindungsöffnung bildet, die eine Verbindung zwischen dem zweiten Öleinlasskanal und dem Ölablasskanal ermöglicht.

Mit dieser technischen Lösung stellt die vorliegende Erfindung ein neuartiges Brückenantriebssystem bereit. Das Brückenantriebssystem umfasst ein Gehäuse, einen Motor, einen Drehzahlreduzierungsmechanismus und eine Wellenbaugruppe. Das Gehäuse umfasst einen ersten Raum und einen zweiten Raum, die voneinander getrennt sind. Der Motor ist in dem ersten Raum untergebracht und der Drehzahlreduzierungsmechanismus ist in dem zweiten Raum untergebracht. Die Wellenbaugruppe umfasst eine Welle, die sich von dem ersten Raum in den zweiten Raum erstreckt. Die Wellenbaugruppe ist mit einem Öleinlass und einem Ölauslass ausgebildet, die beide in dem zweiten Raum angeordnet sind; und ein Ölkanal, der sich von dem Öleinlass in den ersten Raum erstreckt und dann zu dem Ölauslass zurückkehrt, ist innerhalb der Wellenbaugruppe ausgebildet, sodass das Öl aus dem zweiten Raum von dem Öleinlass in den Ölkanal fließen kann, um einen Rotor zu kühlen, und dann von dem Ölauslass in den zweiten Raum zurückkehren kann. Folglich ist die Wellenbaugruppe mit einem Kühlmechanismus ausgebildet, der das im Drehzahlreduzierungsmechanismus gelagerte Öl zu einer Position transportiert, an der sich der Rotor des Motors befindet. Auf diese Weise wird die Kühlleistung des Motors verbessert, wodurch sich die Leistungsfähigkeit des Motors erhöht und die Anforderungen an die Wärmebeständigkeit der einzelnen Komponenten reduziert werden können.

### Kurzbeschreibung der Zeichnungen

FIG. 1 zeigt eine schematische Querschnittsansicht eines bestehenden Brückenantriebssystems.
FIG. 2 zeigt eine schematische Querschnittsansicht eines Brückenantriebssystems gemäß einer Ausführungsform der vorliegenden Erfindung.
FIG. 3 zeigt eine teilweise vergrößerte schematische Ansicht des Brückenantriebssystems aus FIG. 2.
FIG. 4 zeigt eine dreidimensionale schematische Ansicht einer Ölsammelkomponente des Brückenantriebssystems aus FIG. 2.
FIG. 5A zeigt eine dreidimensionale schematische Ansicht einer Ölführungskomponente des Brückenantriebssystems aus FIG. 2.
FIG. 5B zeigt eine weitere dreidimensionale schematische Ansicht der Ölführungskomponente des Brückenantriebssystems aus FIG. 2.

### Ausführliche Beschreibung

Im Folgenden werden in Bezug auf die beigefügten Zeichnungen Ausführungsbeispiele der vorliegenden Erfindung dargestellt. Hierbei sollte beachtet werden, dass diese spezifischen Beschreibungen lediglich dazu dienen, den Fachleuten auf dem Gebiet der Technik zu zeigen, wie die vorliegende Erfindung umgesetzt werden kann, und dass sie weder als vollständige Aufzählung aller möglichen Varianten der vorliegenden Erfindung noch als Einschränkung des Umfangs der vorliegenden Erfindung gedacht sind.

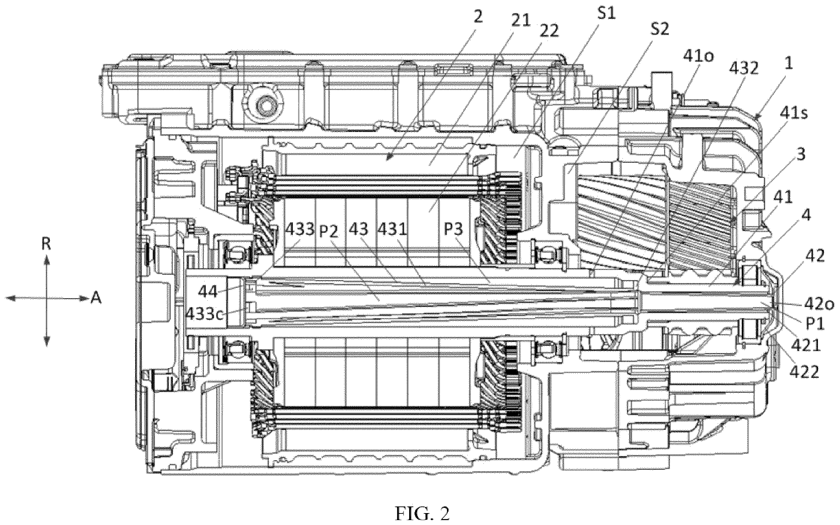

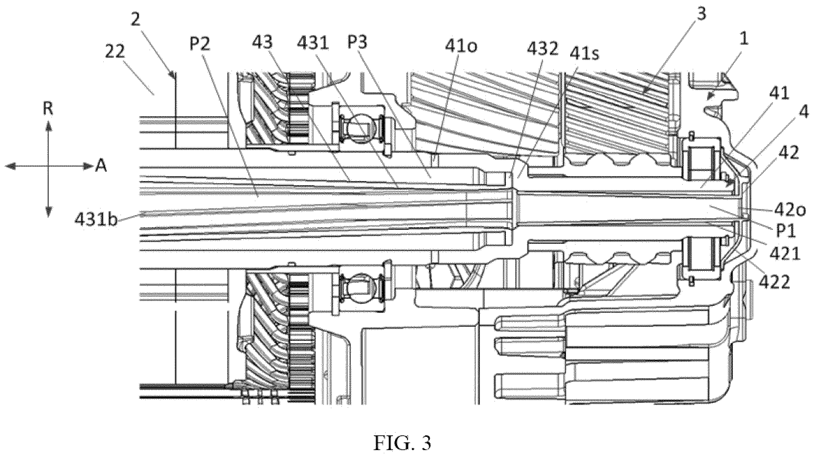

Sofern nicht anders angegeben, beziehen sich in Bezug auf die vorliegende Erfindung die Begriffe "axiale Richtung", "radiale Richtung" und "Umfangsrichtung" auf die axiale Richtung bzw. Axialrichtung, die radiale Richtung bzw. Radialrichtung und die Umfangsrichtung der Welle in der Wellenbaugruppe; "eine axiale Seite" bezieht sich auf die rechte Seite in FIG. 2 und FIG. 3 und "die andere axiale Seite" bezieht sich auf die linke Seite in FIG. 2 und FIG. 3; und "radiale Außenseite" bezieht sich auf die Seite, die in radialer Richtung von der Mittelachse der Welle entfernt ist, und "radiale Innenseite" bezieht sich auf die Seite, die in radialer Richtung nahe der Mittelachse der Welle liegt.

Ein Aufbau eines Brückenantriebssystems gemäß einer Ausführungsform der vorliegenden Erfindung wird unter Bezugnahme auf die beigefügten Zeichnungen der Beschreibung beschrieben.

Wie in FIG. 2 und FIG. 3 gezeigt, umfasst das Brückenantriebssystem gemäß der Ausführungsform der vorliegenden Erfindung ein Gehäuse 1, einen Motor 2, einen Drehzahlreduzierungsmechanismus 3 und eine Wellenbaugruppe 4, die zusammengefügt sind. Im Inneren des Gehäuses 1 ist ein Montageraum ausgebildet, in dem sich der Motor 2, der Drehzahlreduzierungsmechanismus 3 und die Wellenbaugruppe 4 befinden.

In der vorliegenden Ausführungsform umfasst das Gehäuse 1 einen ersten Raum S1 und einen zweiten Raum S2, die voneinander getrennt sind. Der erste Raum S1 und der zweite Raum S2 sind in einer axialen Richtung A angeordnet und der zweite Raum S2 befindet sich auf einer axialen Seite relativ zum ersten Raum S1. Der Motor 2 ist in dem ersten Raum S1 und der Drehzahlreduzierungsmechanismus 3 ist in dem zweiten Raum S2 untergebracht.

In der vorliegenden Ausführungsform umfasst der Motor 2 einen relativ zum Gehäuse 1 fixierten Stator 21 und einen relativ zum Stator 21 drehbaren Rotor 22. Der Rotor 22 befindet sich auf einer radialen Innenseite des Stators 21 und ist mit einer Welle 41 der Wellenbaugruppe 4 drehfest verbunden, sodass die Welle 41 zusammen mit dem Rotor 22 rotieren kann und dabei ein Drehmoment abgibt.

In der vorliegenden Ausführungsform umfasst der Drehzahlreduzierungsmechanismus 3 einen Getriebemechanismus, der aus einer Vielzahl von Zahnrädern besteht, und die Welle 41 der Wellenbaugruppe 4 wird auch als Eingangswelle des Drehzahlreduzierungsmechanismus 3 verwendet, um das Drehmoment vom Rotor 22 des Motors 2 auf den Drehzahlreduzierungsmechanismus 3 zu übertragen.

In der vorliegenden Ausführungsform umfasst die Wellenbaugruppe 4 nicht nur die Welle 41, die sich von dem ersten Raum S1 in den zweiten Raum S2 erstreckt, sondern auch eine Ölsammelkomponente 42, eine Ölführungskomponente 43 und einen Ölstopfen 44. Durch diese Bestandteile ist die Wellenbaugruppe 4 mit einem Öleinlass 42o und einem Ölauslass 41o ausgebildet, die beide in dem zweiten Raum S2 angeordnet sind, und ein Ölkanal, der sich von dem Öleinlass 42o in den ersten Raum S1 erstreckt und dann zu dem Ölauslass 41o zurückkehrt, ist innerhalb der Wellenbaugruppe 4 ausgebildet, sodass die Wellenbaugruppe 4 einen Kühlmechanismus bildet, der es dem Öl in dem zweiten Raum S2 ermöglicht, vom Öleinlass 42o in den Ölkanal zu fließen, um den Rotor 22 zu kühlen, und dann vom Ölauslass 41o in den zweiten Raum S2 zurückzukehren.

Wie bereits erwähnt, ist die Welle 41 in der vorliegenden Ausführungsform einerseits drehfest mit dem Rotor 22 des Motors 2 verbunden, und andererseits wird die Welle 41 als Eingangswelle 41 des Drehzahlreduzierungsmechanismus 3 verwendet. Auf diese Weise kann das Drehmoment vom Rotor 22 des Motors 2 über die Welle 41 auf den Drehzahlreduzierungsmechanismus 3 übertragen werden.

Im Inneren der Welle 41 ist ein innerer Hohlraum ausgebildet, der durch die gesamte Welle 41 entlang der axialen Richtung A verläuft. Der innere Hohlraum umfasst einen Abschnitt mit großem Durchmesser und einen Abschnitt mit kleinem Durchmesser, die miteinander in Verbindung stehen, wobei ein Durchmesser des Abschnitts mit großem Durchmesser größer ist als ein Durchmesser des Abschnitts mit kleinem Durchmesser und der Abschnitt mit kleinem Durchmesser auf einer axialen Seite relativ zu dem Abschnitt mit großem Durchmesser angeordnet ist, sodass eine Stufenstruktur 41s an einem Abschnitt der Welle 41, der sich in dem zweiten Raum S2 befindet, ausgebildet ist. Auf diese Weise wird im Vergleich zu einer im Stand der Technik beschriebenen Drehwelle 30 die Dicke einer Wand der Welle 41, die sich auf der anderen axialen Seite der Stufenstruktur 41s befindet, nicht erhöht.

Darüber hinaus ist ein Teil der Welle 41, der sich in dem zweiten Raum S2 befindet, mit einer Vielzahl von Ölauslässen 41o ausgebildet, die durch die Welle 41 in einer radialen Richtung R verlaufen, und der zweite Raum S2 steht über die Vielzahl von Ölauslässen 41o mit dem Abschnitt mit großem Durchmesser des inneren Hohlraums der Welle 41 in Verbindung.

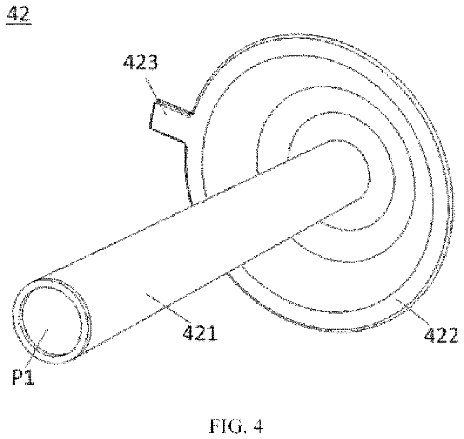

Bei der vorliegenden Ausführungsform ist ein Teil der Ölsammelkomponente 42 in den inneren Hohlraum der Welle 41 eingesetzt, und der andere Teil der Ölsammelkomponente 42 befindet sich zwischen der Welle 41 und dem Gehäuse 1. Die Ölsammelkomponente 42 ist an dem Gehäuse 1 fixiert und die Ölsammelkomponente 42 und die Welle 41 sind voneinander beabstandet. Die Ölsammelkomponente 42 dient zum Sammeln des von den Zahnrädern des Drehzahlreduzierungsmechanismus 3 ausgeschleuderten Öls. Wie in FIG. 4 gezeigt, umfasst die Ölsammelkomponente 42 einen Ölsammelzylinderteil 421, einen Flanschteil 422 und einen Anschlagteil 423, die integriert sind.

Der Ölsammelzylinderteil 421 ist zylinderförmig ausgebildet. Der Ölsammelzylinderteil 421 ist in den Abschnitt mit kleinem Durchmesser des inneren Hohlraums der Welle 41 eingesetzt, der Ölsammelzylinderteil 421 ist in der radialen Richtung R von der Welle 41 beabstandet, und eine axiale Größe des Ölsammelzylinderteils 421 ist ungefähr dieselbe wie eine axiale Größe des Abschnitts mit kleinem Durchmesser des inneren Hohlraums der Welle 41. Der Öleinlass 42o des oben beschriebenen Kühlmechanismus ist an einem axialen Seitenende des Ölsammelzylinderteils 421 ausgebildet und ist immer zum zweiten Raum S2 hin geöffnet. Ein erster Öleinlasskanal P1, der durch den Ölsammelzylinderteil 421 entlang der axialen Richtung A verläuft, ist im Inneren des Ölsammelzylinderteils 421 ausgebildet. Auf diese Weise steht der erste Öleinlasskanal P1 über den Öleinlass 42o mit dem zweiten Raum S2 in Verbindung. Außerdem wird die Querschnittsfläche des ersten Öleinlasskanals P1 von einer axialen Seite zur anderen axialen Seite allmählich größer, wodurch verhindert wird, dass das Öl im ersten Öleinlasskanal P1 zum Öleinlass 42o zurückfließt.

Der Flanschteil 422 ist scheibenförmig ausgebildet und befindet sich außerhalb der Welle 41. Der Flanschteil 422 erstreckt sich von einem axialen Seitenende des Ölsammelzylinderteils 421 in Richtung der radialen Außenseite, und ein Teil der radialen Außenseite des Flanschteils 422 erstreckt sich in Richtung der radialen Außenseite und erstreckt sich gleichzeitig schräg in Richtung der anderen axialen Seite. Auf diese Weise kann der Flanschteil 422 gemeinsam mit der zur Ölführung dienenden Struktur der Innenwand des Gehäuses 1 bewirken, dass das Öl im zweiten Raum S2 am Öleinlass 42o zusammenläuft, sodass die Ölsammelkomponente 42 das Öl in dem zweiten Raum S2 über den Öleinlass 42o in dem ersten Öleinlasskanal P1 sammeln kann.

Der Anschlagteil 423 steht von einem Außenumfang des Flanschteils 422 in Richtung der radialen Außenseite um eine bestimmte Länge ab, und der Anschlagteil 423 ist mit dem Gehäuse 1 klemmend verbunden, sodass die Ölsammelkomponente 42 relativ zum Gehäuse 1 fixiert ist.

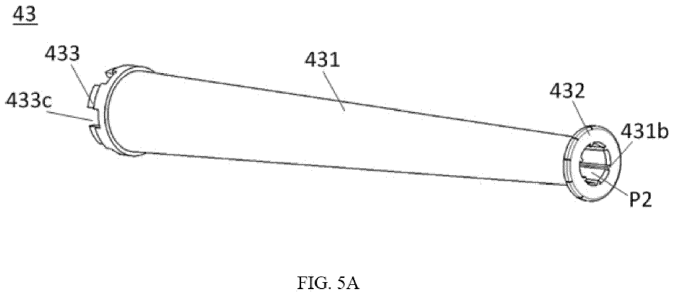

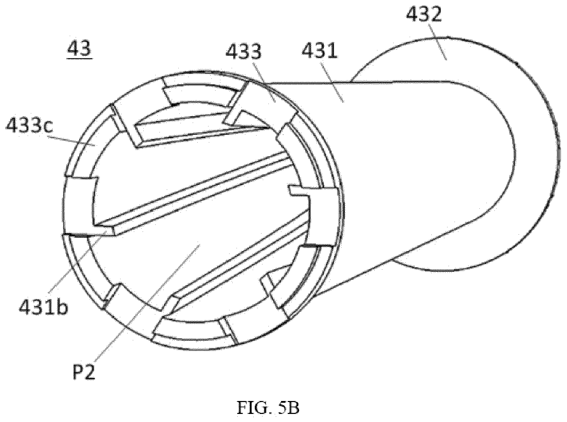

In der vorliegenden Ausführungsform ist die Ölführungskomponente 43 an der Welle 41 fixiert und einstückig in dem Abschnitt mit großem Durchmesser des inneren Hohlraums der Welle 41 angeordnet. Wie in FIG. 5A und FIG. 5B gezeigt, ist die Ölführungskomponente 43 einstückig zylinderförmig ausgebildet. Die Ölführungskomponente 43 umfasst einen Ölführungszylinderteil 431, einen ersten Endkantenteil 432 und einen zweiten Endkantenteil 433, die integriert sind.

Der Ölführungszylinderteil 431 ist von einer Innenwand der Welle 41 in der radialen Richtung R beabstandet. Ein zweiter Öleinlasskanal P2, der mit dem ersten Öleinlasskanal P1 in Verbindung steht, ist im Inneren der Ölführungskomponente 431 ausgebildet, und der zweite Öleinlasskanal P2 verläuft durch den Ölführungszylinderteil 431 entlang der axialen Richtung A. Die Querschnittsfläche eines inneren Hohlraums des zweiten Öleinlasskanals P2 wird von einer axialen Seite zur anderen axialen Seite allmählich größer, wodurch einerseits verhindert wird, dass das in den zweiten Öleinlasskanal P2 eintretende Öl zum ersten Öleinlasskanal P1 zurückkehrt, und andererseits die Führung des Öls im zweiten Öleinlasskanal P2 während der Drehung der Ölführungskomponente 43 mit der Welle 41 von einer axialen Seite zur anderen axialen Seite begünstigt wird. Ein Ölablasskanal P3 ist zwischen einer Außenwand des Ölführungszylinderteils 431 und der Innenwand der Welle 41 ausgebildet, und der Ölablasskanal P3 steht in Verbindung mit dem zweiten Öleinlasskanal P2 und dem Ölauslass 41o, die auf der Welle 41 ausgebildet sind. Darüber hinaus ist die Innenwand des Ölführungszylinderteils 431 mit Schaufeln 431b ausgebildet, die zur Innenseite des zweiten Öleinlasskanals P2 hin vorstehen, und diese Schaufeln 431b erstrecken sich spiralförmig entlang der axialen Richtung A. Auf diese Weise kann während der Drehung der Ölführungskomponente 43 mit der Welle 41 ein Unterdruck im zweiten Öleinlasskanal P2 bewirkt werden, was für das Öl im ersten Öleinlasskanal P1 von Vorteil ist, damit es in den zweiten Öleinlasskanal P2 in Richtung der anderen axialen Seite eintritt und weiter in Richtung der anderen axialen Seite fließt. Dies ist vorteilhaft, um die Zirkulation des Öls im Ölkanal des Kühlmechanismus zu beschleunigen.

Der erste Endkantenteil 432 befindet sich an einem axialen Seitenende des Ölführungszylinderteils 431 und erstreckt sich vom Ölführungszylinderteil 431 in Richtung der radialen Außenseite. Der erste Endkantenteil 432 ist mit der Welle 41 durch eine Presspassung fixiert, und der erste Endkantenteil 432 liegt von der anderen axialen Seite aus an der Stufenstruktur 41s der Welle 41 an.

Der zweite Endkantenteil 433 befindet sich am anderen axialen Seitenende des Ölführungszylinderteils 431 und erstreckt sich vom Ölführungszylinderteil 431 in Richtung der radialen Außenseite. Der zweite Endkantenteil 433 und die Welle 41 sind durch eine Presspassung an der Welle 41 fixiert, und der zweite Endkantenteil 433 liegt von einer axialen Seite aus an dem Ölstopfen 44 an. Der zweite Endkantenteil 433 der Ölführungskomponente 43 ist mit einem Aussparungsteil 433c ausgebildet, der in Richtung des Ölstopfens 44 geöffnet ist, und der Aussparungsteil 433c bildet eine Verbindungsöffnung, die eine Verbindung zwischen dem zweiten Öleinlasskanal P2 und dem Ölablasskanal P3 ermöglicht.

In der vorliegenden Ausführungsform befindet sich der Ölstopfen 44 im Abschnitt mit großem Durchmesser des inneren Hohlraums der Welle 41 und ist durch eine Presspassung an der Welle 41 fixiert, die Ölführungskomponente 43 ist zwischen dem Ölstopfen 44 und der Stufenstruktur 41s angeordnet, ein axiales Seitenende der Ölführungskomponente 43 liegt an der Stufenstruktur 41s an, und das andere axiale Seitenende der Ölführungskomponente 43 liegt an dem Ölstopfen 44 an. Nachstehend wird die Funktionsweise des Kühlmechanismus des Brückenantriebssystems gemäß der vorliegenden Erfindung beschrieben.

Wenn der Motor 2 in Betrieb ist, treibt der Rotor 22 des Motors 2 die Welle 41 zur Drehung an, und die Welle 41 treibt die Zahnräder des Drehzahlreduzierungsmechanismus 3 zur Drehung an. Während der Drehung der Zahnräder wird das Öl im zweiten Raum S2 an die Innenwand des Gehäuses 1 geschleudert.

Durch die Ölsammelstruktur an der Innenwand des Gehäuses 1 und die Ölsammelkomponente 42 der Wellenbaugruppe 4 wird das Öl an der Innenwand des Gehäuses 1 zum Öleinlass 42o gesammelt und gelangt in den ersten Öleinlasskanal P1 der Ölsammelkomponente 42.

Da der Unterdruck im zweiten Öleinlasskanal P2 während der Drehung der Ölführungskomponente 43 mit der Welle 41 entsteht, wird der Unterdruck durch die Schaufeln 431b der Ölführungskomponente 43 erhöht, und das Öl im ersten Öleinlasskanal P1 der Ölsammelkomponente 42 fließt in den zweiten Öleinlasskanal P2 der Ölführungskomponente 43 und fließt kontinuierlich zur anderen axialen Seite.

Über die Verbindungsöffnung der Ölführungskomponente 43 fließt das Öl im zweiten Öleinlasskanal P2 der Ölführungskomponente 43 in den Ölablasskanal P3 zwischen der Außenwand der Ölführungskomponente 43 und der Innenwand der Welle 41, und das Öl im Ölablasskanal P3 kühlt den Rotor 22 des Motors 2 und fließt zur einen axialen Seite.

Schließlich kehrt das Öl im Ölablasskanal P3 über den Ölauslass 41o in das Innere des zweiten Raums S2 zurück, wodurch der Zirkulationsvorgang abgeschlossen wird. Wenn sich das Brückenantriebssystem im Betriebszustand befindet, wird der oben beschriebene Zirkulationsvorgang kontinuierlich durchgeführt, wobei das Öl im zweiten Raum S2 zur kontinuierlichen Kühlung des Rotors 22 des Motors 2 verwendet und die Kühlleistung des Motors 2 weiter verbessert wird.

Die vorliegende Erfindung ist nicht auf die oben genannten Ausführungsformen beschränkt. Unter der Anleitung der vorliegenden Erfindung kann der Fachmann verschiedene Änderungen an den oben genannten Ausführungsformen der vorliegenden Erfindung vornehmen, ohne vom Umfang der vorliegenden Erfindung abzuweichen. Darüber hinaus ist auch Folgendes zu beachten:
(i) Obwohl diesbezüglich keine spezifische Erklärung in den obigen spezifischen Ausführungsformen gegeben ist, versteht es sich, dass der Querschnitt des Abschnitts mit großem Durchmesser des inneren Hohlraums der Welle 41 in der axialen Richtung A gleich sein kann, wenn eine Kostensteigerung vermieden werden soll; und wenn der Ölfluss im Ölablasskanal P3 zum Ölauslass 41o während der Drehung der Welle 41 gefördert werden soll, kann der Querschnitt des Abschnitts mit großem Durchmesser ebenfalls allmählich zum Ölauslass 41o hin größer werden.
(ii) Obwohl diesbezüglich keine spezifische Erklärung in den obigen spezifischen Ausführungsformen gegeben ist, versteht es sich, dass bei dem Montagevorgang des Einsetzens der Ölsammelkomponente 42 und der Ölführungskomponente 43 in den inneren Hohlraum der Welle 41 die Ölsammelkomponente 42 in den Abschnitt mit kleinem Durchmesser des inneren Hohlraums der Welle 41 von einer axialen Seite eingesetzt wird und die Ölführungskomponente 43 in den Abschnitt mit großem Durchmesser des inneren Hohlraums der Welle 41 von der anderen axialen Seite eingesetzt wird.
(iii) Obwohl diesbezüglich keine spezifische Erklärung in den obigen spezifischen Ausführungsformen gegeben ist, versteht es sich, dass die Form des ersten Öleinlasskanals P1 und des zweiten Öleinlasskanals P2 eine kreisförmige Kegelstumpfform mit einer Querschnittsfläche sein kann, die von einer axialen Seite zur anderen axialen Seite allmählich größer wird. Bevorzugt sind sowohl der erste Öleinlasskanal P1 als auch der zweite Öleinlasskanal P2 mit einem Kegelwinkel ausgebildet. Der Kegelwinkel des ersten Öleinlasskanals P1 ermöglicht es dem ersten Öleinlasskanal P1, sich zur anderen axialen Seite hin auszudehnen, und der Kegelwinkel des zweiten Öleinlasskanals P2 ermöglicht es dem zweiten Öleinlasskanal P2, sich zur anderen axialen Seite hin auszudehnen.
(iv) Das Brückenantriebssystem der vorliegenden Erfindung ist nicht auf reine Elektrofahrzeuge beschränkt, sondern kann auch als Teil eines Hybridantriebssystems für Fahrzeuge mit Hybridantrieb verwendet werden.

### LISTE DER BEZUGSZEICHEN

- 10: Motor
- 20: Drehzahlreduzierungsmechanismus
- 30: Drehwelle
- 30w: Trennwand
- 1: Gehäuse
- S1: Erster Raum
- S2: Zweiter Raum
- 2: Motor
- 21: Stator
- 22: Rotor
- 3: Drehzahlreduzierungsmechanismus
- 4: Wellenbaugruppe
- 41: Welle
- 41o: Ölauslass
- 41s: Stufenstruktur
- 42: Ölsammelkomponente
- 42o: Öleinlass
- 421: Ölsammelzylinderteil
- 422: Flanschteil
- 423: Anschlagteil
- 43: Ölführungskomponente
- 431: Ölführungszylinderteil
- 431b: Schaufel
- 432: Erster Endkantenteil
- 433: Zweiter Endkantenteil
- 433c: Aussparungsteil
- 44: Ölstopfen
- P1: Erster Öleinlasskanal
- P2: Zweiter Öleinlasskanal
- P3: Ölablasskanal
- A: Axiale Richtung
- R: Radiale Richtung.

## Patentansprüche

1. Brückenantriebssystem, umfassend ein Gehäuse (1), einen Motor (2), einen Drehzahlreduzierungsmechanismus (3) und eine Wellenbaugruppe (4), wobei das Gehäuse (1) einen ersten Raum (S1) und einen zweiten Raum (S2) umfasst, die voneinander getrennt sind; wobei der zweite Raum (S2) auf einer axialen Seite relativ zu dem ersten Raum (S1) in einer axialen Richtung (A) der Wellenbaugruppe (4) angeordnet ist; wobei der Motor (2) in dem ersten Raum (S1) untergebracht ist und der Drehzahlreduzierungsmechanismus (3) in dem zweiten Raum (S2) untergebracht ist; wobei die Wellenbaugruppe (4) eine Welle (41) umfasst, die sich von dem ersten Raum (S1) in den zweiten Raum (S2) erstreckt; wobei die Welle (41) drehfest mit einem Rotor (22) des Motors (2) verbunden ist und die Welle (41) auch als eine Eingangswelle des Drehzahlreduzierungsmechanismus (3) verwendet wird;
wobei die Wellenbaugruppe (4) mit einem Öleinlass (42o) und einem Ölauslass (41o) ausgebildet ist, die beide in dem zweiten Raum (S2) angeordnet sind; und wobei ein Ölkanal, der sich von dem Öleinlass (42o) in den ersten Raum (S1) erstreckt und dann zu dem Ölauslass (41o) zurückkehrt, innerhalb der Wellenbaugruppe (4) ausgebildet ist, sodass Öl aus dem zweiten Raum (S2) von dem Öleinlass (42o) in den Ölkanal fließen kann, um den Rotor (22) zu kühlen, und dann von dem Ölauslass (41o) in den zweiten Raum (S2) zurückkehren kann.

2. Brückenantriebssystem nach Anspruch 1, **dadurch gekennzeichnet, dass** im Inneren der Welle (41) ein entlang der axialen Richtung (A) durch die Welle (41) verlaufender innerer Hohlraum ausgebildet ist, und die Wellenbaugruppe (4) ferner umfasst:
eine Ölsammelkomponente (42), wobei die Ölsammelkomponente (42) an dem Gehäuse (1) fixiert ist und die Ölsammelkomponente (42) und die Welle (41) voneinander beabstandet sind, wobei der Öleinlass (42o) an der Ölsammelkomponente (42) ausgebildet ist, wobei ein Teil der Ölsammelkomponente (42), der in den inneren Hohlraum eingesetzt ist, mit einem ersten Öleinlasskanal (P1) ausgebildet ist, der mit dem Öleinlass (42o) in Verbindung steht, und wobei die Ölsammelkomponente (42) das Öl in dem zweiten Raum (S2) über den Öleinlass (42o) in dem ersten Öleinlasskanal (P1) sammeln kann; und
eine Ölführungskomponente (43), wobei die Ölführungskomponente (43) an der Welle (41) fixiert und einstückig in dem inneren Hohlraum angeordnet ist, wobei ein zweiter Öleinlasskanal (P2) in Verbindung mit dem ersten Öleinlasskanal (P1) innerhalb der Ölführungskomponente (43) ausgebildet ist, wobei ein Ölablasskanal (P3) zwischen der Ölführungskomponente (43) und der Welle (41) ausgebildet ist, wobei der Ölablasskanal (P3) in Verbindung mit dem zweiten Öleinlasskanal (P2) und dem Ölauslass (41o) steht, die auf der Welle (41) ausgebildet sind, und wobei während der Drehung mit der Welle (41) die Ölführungskomponente (43) es dem Öl aus dem ersten Öleinlasskanal (P1) ermöglichen kann, nacheinander durch den zweiten Öleinlasskanal (P2) und den Ölablasskanal (P3) zu fließen und dann vom Ölauslass (41o) zum zweiten Raum (S2) zurückzukehren.

3. Brückenantriebssystem nach Anspruch 2, **dadurch gekennzeichnet, dass** die Ölsammelkomponente (42) umfasst:
einen Ölsammelzylinderteil (421), wobei der Ölsammelzylinderteil (421) in dem inneren Hohlraum angeordnet ist, wobei der Öleinlass (42o) an einem axialen Seitenende des Ölsammelzylinderteils (421) ausgebildet ist, und der erste Öleinlasskanal (P1) durch den Ölsammelzylinderteil (421) entlang der axialen Richtung (A) verläuft; und
einen Flanschteil (422), wobei der Flanschteil (422) außerhalb der Welle (41) angeordnet ist, wobei der Flanschteil (422) sich von einem axialen Seitenende des Ölsammelzylinderteils (421) in Richtung einer radialen Außenseite erstreckt, und zumindest ein Teil des Flanschteils (422) sich in Richtung der radialen Außenseite erstreckt und sich gleichzeitig schräg in Richtung der anderen axialen Seite erstreckt, um zu bewirken, dass das Öl in dem zweiten Raum (S2) am Öleinlass (42o) zusammenläuft.

4. Brückenantriebssystem nach Anspruch 3, **dadurch gekennzeichnet, dass** eine Querschnittsfläche eines inneren Hohlraums des Ölsammelzylinderteils (421), der zur Bildung des ersten Öleinlasskanals (P1) verwendet wird, von einer axialen Seite zur anderen axialen Seite allmählich größer wird.

5. Brückenantriebssystem nach Anspruch 3 oder 4, **dadurch gekennzeichnet, dass** die Ölsammelkomponente (42) ferner einen von einem Außenumfang des Flanschteils (422) zur radialen Außenseite hin abstehenden Anschlagteil (423) umfasst und der Anschlagteil (423) mit dem Gehäuse (1) klemmend verbunden ist.

6. Brückenantriebssystem nach einem der Ansprüche 2 bis 5, **dadurch gekennzeichnet, dass** die Ölführungskomponente (43) umfasst:
einen Ölführungszylinderteil (431), wobei der Ölführungszylinderteil (431) von einer Innenwand der Welle (41) beabstandet ist, und der zweite Öleinlasskanal (P2) durch den Ölführungszylinderteil (431) entlang der axialen Richtung (A) verläuft;
einen ersten Endkantenteil (432), wobei der erste Endkantenteil (432) an einem axialen Seitenende des Ölführungszylinderteils (431) angeordnet und an der Welle (41) fixiert ist; und
einen zweiten Endkantenteil (433), wobei der zweite Endkantenteil (433) an dem anderen axialen Seitenende des Ölführungszylinderteils (431) angeordnet und an der Welle (41) fixiert ist, und der zweite Endkantenteil (433) mit einer Verbindungsöffnung ausgebildet ist, die eine Verbindung zwischen dem zweiten Öleinlasskanal (P2) und dem Ölablasskanal (P3) ermöglicht.

7. Brückenantriebssystem nach Anspruch 6, **dadurch gekennzeichnet, dass** eine Querschnittsfläche eines inneren Hohlraums des Ölführungszylinderteils (431), der zur Bildung des zweiten Öleinlasskanals (P2) verwendet wird, von einer axialen Seite zur anderen axialen Seite allmählich größer wird.

8. Brückenantriebssystem nach Anspruch 6 oder 7, **dadurch gekennzeichnet, dass** eine Innenwand des Ölführungszylinderteils (431) mit Schaufeln (431b) ausgebildet ist, die zu einer Innenseite des zweiten Öleinlasskanals (P2) hin vorstehen, um das Öl so zu führen, dass es während der Drehung der Ölführungskomponente (43) mit der Welle (41) in den Ölkanal fließt.

9. Brückenantriebssystem nach einem der Ansprüche 2 bis 8, **dadurch gekennzeichnet, dass** die Wellenbaugruppe (4) ferner einen Ölstopfen (44) umfasst, der im inneren Hohlraum der Welle (41) angeordnet und innerhalb der Welle (41) fixiert ist;
der innere Hohlraum einen Abschnitt mit großem Durchmesser und einen Abschnitt mit kleinem Durchmesser umfasst, die miteinander in Verbindung stehen, ein Durchmesser des Abschnitts mit großem Durchmesser größer ist als ein Durchmesser des Abschnitts mit kleinem Durchmesser, und der Abschnitt mit kleinem Durchmesser auf einer axialen Seite relativ zu dem Abschnitt mit großem Durchmesser angeordnet ist, sodass eine Stufenstruktur (41s) innerhalb der Welle (41) ausgebildet wird; und die Ölführungskomponente (43) zwischen dem Ölstopfen (44) und der Stufenstruktur (41s) angeordnet ist, ein axiales Seitenende der Ölführungskomponente (43) an der Stufenstruktur (41s) anliegt und das andere axiale Seitenende der Ölführungskomponente (43) an dem Ölstopfen (44) anliegt.

10. Brückenantriebssystem nach Anspruch 9, **dadurch gekennzeichnet, dass** der zweite Endkantenteil (433) der Ölführungskomponente (43) mit einem Aussparungsteil (433c) ausgebildet ist, der in Richtung des Ölstopfens (44) geöffnet ist, und der zweite Endkantenteil (433) an dem Ölstopfen (44) anliegt, sodass der Aussparungsteil (433c) eine Verbindungsöffnung bildet, die eine Verbindung zwischen dem zweiten Öleinlasskanal (P2) und dem Ölablasskanal (P3) ermöglicht.
